# EUROPEAN PATENT SPECIFICATION

(11) **EP 1 362 082 B1**
(45) Date of publication and mention of the grant of the patent: **05.10.2011**
(21) Application number: 01271100.8
(22) Date of filing: 12.12.2001
(51) Int. Cl.: C09D 11/00, C08G 18/75, C08G 18/08, C08G 18/32, C08G 18/38

(54) **COLOURED, WATER-DISSIPATABLE POLYURETHANES**
GEFÄRBTE WASSERVERTEILBARE POLYURETHANE
POLYURETHANES COLORES DISPERSABLES DANS L'EAU

(30) Priority: 20.12.2000 GB 0031020; 20.12.2000 GB 0031019
(43) Date of publication of application: 19.11.2003
(73) Proprietor: FUJIFILM Imaging Colorants Limited, Blackley, Manchester M9 8ZS (GB)
(72) Inventor: JAMES, Mark Robert, Manchester M9 8ZS (GB); PEARS, David Alan, Manchester M9 8ZS (GB); WALKER, Mark, Manchester M9 8ZS (GB)
(74) Representative: Schmitt, Maja
(86) International application number: PCT/GB2001/005485
(87) International publication number: WO 2002/050197

(56) References cited:
- WO-A-99/42428
- WO-A-99/50326
- US-A- 5 786 410

## Description

This invention relates to coloured, water-dissipatable polyurethanes, to inks comprising coloured, water-dissipatable polyurethanes and to their use in ink-jet printing.

Ink-jet printing involves printing an image onto a substrate by ejecting ink droplets through a fine nozzle onto the substrate without bringing the fine nozzle into contact with the substrate.

There are many demanding performance requirements for colorants and inks used in ink-jet printing. For example they desirably provide sharp, non-feathered images having good water-fastness, light-fastness and optical density. The inks are often required to dry quickly when applied to a substrate to prevent smudging, but they should not form a crust which would block the tip of the fine nozzle. The inks should also be stable to storage over time without decomposing or forming a precipitate which could also block the fine nozzle. Thermal and piezoelectric ink-jet printers are widely used, thus there is a need for inks, suitable for use in both types of printers, having high colour strength and giving images having a good light fastness and optical density when printed on a typical substrate, especially plain paper.

Coloured polyurethanes for use in ink-jet printers are known for example from EP769509, however these involve high molecular weight chain-extended polyurethanes which are not ideal for use in ink-jet printers with thermal heads as the use of heat may result in nozzle failure and other operability problems.

WO99/50326 discloses a low molecular weight, coloured polyurethane suitable for ink-jet printing, however for good picture quality the print quality, printing operability and optical densities may still be improved.

US5786410 discloses an ink composition containing a coloured sulfopolyester/urethane resin. However the percentage of ionic water-dispersing groups (sulfonate) is low, and the claimed optical densities are also very low.

US5637638 discloses an erasable ink composition where a monofunctional dye is coupled to a polyester or polyamide to give a pendant dye moiety, thus resulting in a low percentage by weight of colourant and only a low percentage by weight of compounds bearing water-dispersing groups are used.

We have now invented improved coloured, water-dissipatable polyurethanes with increased levels of colorant.

According to a first aspect of the present invention there is provided a coloured, water-dissipatable polyurethane having a weight average molecular weight ≤ 30,000 Daltons, obtained from the reaction of components comprising:
i) of from 5 to 50% by weight of at least one organic polyisocyanate;
ii) of from 15 to 50% by weight of at least one compound providing ionic water-dispersing groups having two or more isocyanate-reactive groups selected from -OH, -NH₂, -NH- and -SH groups;
iii) of from 15 to 50% by weight of at least one colorant having two or more functional groups selected from isocyanate groups and isocyanate-reactive groups
iv) of from 0 to 35% by weight of at least one colorant having one functional group selected from isocyanate groups and isocyanate-reactive groups;
v) of from 0 to 10% by weight of at least one compound having two or more isocyanate-reactive groups other than as in ii) or iii);
vi) of from 0 to 10% by weight of at least one compound having one isocyanate-reactive group other than as in iv);
wherein components iii) and iv) add up to at least 18% and components i), ii), iii), iv), v) and vi) add up to 100%.

Preferably components iii) and iv) add up to at least 20%.

Preferably Q is selected independently from O and or NH, and most preferably Q is O.

More preferably the coloured, water-dissipatable polyurethane of the present invention is chain-terminated with a colorant. The more preferred coloured, water-dissipatable polyurethane chain-terminated with a colorant is obtained from the reaction of components comprising:
i) of from 5 to 50% by weight of at least one organic polyisocyanate;
ii) of from 15 to 50% by weight of at least one compound providing ionic water-dispersing groups having two or more isocyanate-reactive groups selected from -OH, -NH₂, -NH- and -SH groups;
iii) of from 15 to 40% by weight of at least one colorant having two or more functional groups selected from isocyanate groups and isocyanate-reactive groups;
iv) of from 5 to 35% by weight of at least one colorant having one functional group selected from isocyanate groups and isocyanate-reactive groups; and
v) of from 0 to 10% by weight of at least one compound having two or more isocyanate-reactive groups other than as in ii) or iii);
vi) of from 0 to 10% by weight of at least one compound having one isocyanate-reactive group other than as in iv);
wherein components i), ii), iii), iv), v) and vi) add up to 100%.

Preferably the coloured, water-dissipatable polyurethane chain-terminated with a colorant according to the more preferred embodiment of the invention comprises a coloured, water-dissipatable polyurethane of Formula 2: 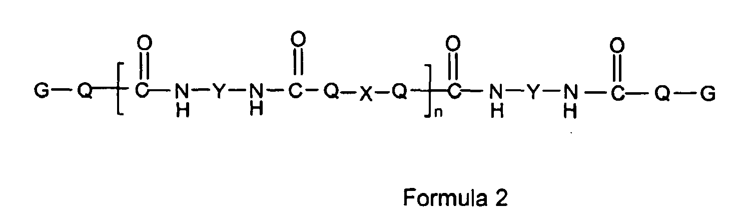 wherein:
- X: is a residue independently derived from components ii), iii) and or v);
- Q: is independently selected from O, NH, NR and or S;
- Y: is a residue derived from component i);
- G: is a residue derived from component iv) and optionally component vi); and
- n: is an integer from 1 to 60.

The coloured water-dissipatable polyurethane has a weight average molecular weight (Mw) ≤ 30,000 Daltons because this Mw leads to an improved performance of inks containing the polyurethane, especially for use in thermal ink-jet printers. The Mw of the polyurethane is preferably less than 25,000, more preferably from 1000 to 25,000 and most preferably from 1000 to 20,000 Daltons. Mw may be measured by gel permeation chromatography (GPC). The gel permeation chromatography method used for determining Mw preferably comprises applying the polyurethane to be measured to a chromatography column packed with cross-linked polystyrene/divinyl benzene, eluting the column with tetrahydrofuran at a temperature of 40°C and assessing the Mw of the polyurethane compared to a number of a polystyrene standards of a known Mw. Suitable chromatography columns packed with cross-linked polystyrene/divinyl benzene are commercially available from Polymer Laboratories. As an alternative to the GPC method for determining Mw, one may use other methods, for example multi-angle light scattering.

Component i) may be any organic polyisocyanate known in the art, preferably having two isocyanate groups, and includes aliphatic, cycloaliphatic or aromatic isocyanates. Examples of suitable organic polyisocyanates include ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate. Mixtures of the polyisocyanates can be used, particularly isomeric mixtures of the toluene diisocyanates or isomeric mixtures of the diphenylmethane diisocyanates (or their hydrogenated derivatives), and also organic polyisocyanates which have been modified by the introduction of urethane, allophanate, urea, biuret, carbodiimide, uretonimine or isocyanurate residues.

Preferred organic polyisocyanates include cycloaliphatic polyisocyanates, especially isophorone diisocyanate or hydrogenated 4,4-diphenyl methyl diisocyanate, and aliphatic isocyanates, especially 1,6-hexamethylene diisocyanate. A small quantity of organic triisocyanates may be included as part of component i) but this amount preferably does not exceed 5% by weight relative to the total weight of component i). In a preferred embodiment component i) consists of a mixture of organic diisocyanates and from 0 to 5% of organic triisocyanate by weight relative to diisocyanate.

Preferably the coloured, water-dissipatable polyurethane of the invention comprises of from 15 to 48 wt %, more preferably of from 15 to 45 wt % of component i).

The nature and level of water-dispersing groups in the coloured, water-dissipatable polyurethane influences whether a solution, dispersion, emulsion or suspension is formed on dissipation of the coloured, water-dissipatable polyurethane.

The water-dispersing group content of the coloured, water-dissipatable polyurethane may vary within wide limits but is usually selected to be sufficient to ensure the coloured, water-dissipatable polyurethane forms stable ink-jet printing inks in water and aqueous media. The coloured, water-dissipatable polyurethane is preferably soluble in water, although a minor amount of the coloured, water-disssipatable polyurethane may be insoluble in water and exist as dispersed particles when mixed with aqueous media or water.

Component ii) providing ionic water-dispersing groups has at least two isocyanate-reactive groups which are selected from
-OH, -NH₂, -NH- and -SH. These isocyanate-reactive groups are capable of reacting with an isocyanate (-NCO) group in component i) or component iii). Component ii) may have three or more isocyanate-reactive groups, preferably in low levels not exceeding 5% by weight relative to the total weight of component ii).

The ionic water-dispersing groups are preferably present in the coloured, water-dissipatable polyurethane as in-chain, pendant or terminal groups.

The ionic water-dispersing groups may be cationic, anionic or a mixture of cationic and anionic water-dispersing groups. Preferred ionic water-dispersing groups include cationic quaternary ammonium groups and anionic phosphonic acid groups, sulphonic acid groups and carboxylic acid groups. More preferred ionic water-dispersing groups are sulphonic acid groups, carboxylic acid groups and quaternary ammonium groups.

The ionic water-dispersing groups may be incorporated into the coloured, water-dissipatable polyurethane in the form of low molecular weight monomers, for example polyols or polyamines bearing the appropriate ionic water-dispersing groups. Preferred isocyanate-reactive compounds providing water-dispersing groups are diols having one or more carboxylic acid groups or sulphonic acid groups, where examples include bis(2-hydroxyethyl)-5-sodiosulphoisophthalate and dihydroxy alkanoic acids, especially 2,2-dimethylol propionic acid and diols having quaternary ammonium groups such as quaternary ammonium salt diols or protonated amine diols, for example dimethanol diethyl ammonium bromide.

The carboxylic acid and sulphonic acid groups may be subsequently fully or partially neutralised with a base containing a cationic charge to give a salt. If the carboxylic acid or sulphonic acid groups are used in combination with a non-ionic water-dispersing group, neutralisation may not be required. The conversion of any free acid groups into the corresponding salt may be effected during the preparation of the coloured, water-dissipatable polyurethane and/or during the preparation of an ink from the coloured, water-dissipatable polyurethane.

Preferably the base used to neutralise any acid water-dispersing groups is ammonia, an amine or an inorganic base. Suitable amines are tertiary amines, for example triethylamine or triethanolamine. Suitable inorganic bases include alkaline hydroxides, oxides and carbonates, for example lithium hydroxide, sodium hydroxide, or potassium hydroxide. A quaternary ammonium hydroxide, for example N⁺(CH₃)₄OH⁻, can also be used. Generally a base is used which gives the required counter ion desired for the ink which is prepared from the coloured, water-dissipatable polyurethane. For example, suitable counter ions include Li⁺, Na⁺, K⁺, NH₄⁺, Cs⁺ and substituted ammonium salts, including tributylammonium, imidazolium, tetramethyl ammonium, tetraethyl ammonium, tetrabutyl ammonium, tetrabutyl phosphonium trimethyl sulphonium salts and mixtures thereof. NH₄⁺ or a mixture of Li⁺ and Na⁺ is especially preferred.

Preferably the coloured, water-dissipatable polyurethane of the invention comprises of from 15 to 49 wt %, more preferably of from 20 to 47 wt % of component ii).

The function of component iii) and optional component (iv) is to colour the polyurethane. A colorant for the purpose of this invention may be described as a chromophoric group having reactive functional group(s) and optionally linker group(s). The colorant preferably comprises a chromophoric group and a functional group selected from isocyanate and isocyanate-reactive groups. Colorants having more than two of said functional groups may be present in low levels, preferably not exceeding 5% by weight relative to the total weight of component iii).

The functional group(s) may be attached directly to the chromophoric group or may be attached through a linker group. An example of a suitable linker group is an optionally substituted alkyl group, a polyether alkyl chain, a cycloalkyl or aromatic ring or a combination thereof.

As used herein the term chromophoric group means the complete arrangement of atoms which give rise to the observed colour. For example for Cl Disperse Brown 4 (molecular weight 459); used in the examples below, the terminal hydroxy groups would not be considered to contribute significantly to the observed colour and therefore the molecular weight of the chromophoric group would be 425 without the valency fully met or 427 with the valency fully met.

The chromophoric group preferably comprises an azo, metallised azo, anthraquinone, pyrroline, phthalocyanine, polymethine, aryl-carbonium, triphenodioxazine, diarylmethane, triarylmethane, anthraquinone, phthalocyanine, methine, polymethine, indoaniline, indophenol, stilbene, squarilium, aminoketone, xanthene, fluorone, acridene, quinolene, thiazole, azine, induline, nigrosine, oxazine, thiazine, indigoid, quinonioid, quinacridone, lactone, benzodifuranone, formazene or indolene group or a combination of two or more such groups. More preferred chromophoric groups are azo groups, especially monoazo, disazo, trisazo, metallized azo, anthraquinone and phthalocyanine groups. Especially preferred chromophoric groups include anthraquinone, formazenes, disazo, metallised azo and monoazo groups comprising two aryl groups linked by an azo group where optionally one or both aryl groups are heteroaryl groups.

Preferably the colorant is a dye comprising a chromophoric group and one or more functional groups selected from isocyanate and isocyanate-reactive groups and more preferably isocyanate-reactive groups. Preferably the colorant is a dye which is soluble in organic solvent and or the reaction mixture used in the preparation of the coloured, water-dissipatable polyurethane polymer.

Component iii) and optional component iv) preferably comprise from 1 to 10, more preferably 1 to 5, especially 1, 2 or 3 of said dyes. The amount of component iii) and iv) used in the reaction mixture depends on the intensity of colour required in the coloured, water-dissipatable polyurethane. The amount of component iii) and iv) combined is preferably in the range of from 20 to 55%, preferably in the range of from 25 to 55%, more preferably in the range of from 25 to 50%, most preferably in the range of from 30 to 50%, especially in the range of from 35 to 50%, and most especially in the range of from 40 to 50% by weight relative to the total weight of components i) to vi). Preferaby the coloured, water-dissipatable polyurethane of the present invention comprises in the range of from 15 to 50%, more preferably from 20 to 50%, most preferably from 25 to 50% and especially from 30 to 45% by weight of chromophoric groups relative to the total weight of components i) to vi).

Component v) preferably comprises organic polyols or polyamines having a molecular weight up to 3000, more preferably up to 2000, especially from 250 to 2000. Preferred organic polyols include diols which are free from ionic water-dispersing groups and mixtures thereof. Such diols may be members of any of the chemical classes of polymeric diols used or proposed to be used in polyurethane formulations. In particular, the diols may be polyesters, polyesteramides, polyethers (other than ones providing polyethyleneoxide and/or polypropyleneoxide groups), polythioethers, polycarbonates, polyacetals, polyolefins or polysiloxanes.

Further examples of diols which are free from ionic water-dispersing groups include organic diols and polyols having molecular weights below 400. Examples of such lower molecular weight diols and polyols include ethylene glycol, diethylene glycol, tetraethylene glycol, bis(hydroxyethyl) terephthalate, cyclohexane dimethanol, furan dimethanol, polyethylene glycol and polypropylene glycol.

Component v) may also comprise isocyanate-reactive compounds providing non-ionic water dispersing groups. Preferred non-ionic water-dispersing groups are in-chain, terminal and pendant polyoxyalkylene groups, and/or poly THF, more preferably polyoxypropylene and polyoxyethylene groups. Examples include non-ionic water-dispersing groups such as

RO(CH₂CH₂O)ₙH, RO(CH₂CH₂O)ₙ(CH₂CH(CH₃)O)_{y}CH₂CH(CH₃)NH₂,

or H₂NCH(CH₃)CH₂(CH(CH₃)CH₂O)_{y}(CH₂CH₂O)ₙ(CH₂CH(CH₃)O)_{y}CH₂CH(CH₃)NR¹R¹, wherein n = 1 to 100, R is H or CH₃, each R¹ independently is H or a substituted or unsubstituted C₁₋₁₀ alkyl group (especially -CH₂CH₂-OH) and y = 2 to 15.

Component vi) comprises terminating compounds used to cap off any excess isocyanate end groups in the coloured, water-dissipatable polyurethane resulting from the reaction of components i) to v) by the addition of compounds having one isocyanate-reactive group. Compounds having two isocyanate-reactive groups may be used if one of the isocyanate-reactive groups is far more reactive than the other, thereby reacting essentially as a monofunctional terminating compound. For example in ethanolamine the amine group is far more reactive than the hydroxyl group.

The terminating compounds may also bear ionic and/or non-ionic water-dispersing groups as described above for compounents ii) and v) respectively.

Preferably the coloured, water-dissipatable polyurethane of the invention comprises ≤ 15 wt %, more preferably ≤ 10 wt %, most preferably ≤ 8 wt %, especially ≤ 5 wt % and most especially ≤ 3 wt % of components v) and vi) together.

The coloured, water-dissipatable polyurethane may contain further linkages in addition to urethane linkages, for example urea, amide, thiourea or thiourethane linkages. The coloured, water-dissipatable polyurethane of the present invention may be any colour and preferably the coloured, water-dissipatable polyurethane of the present invention (and the resultant inks) is yellow, magenta, cyan, black, orange, brown, red, blue or green.

The coloured, water-dissipatable polyurethane may be prepared in a conventional manner by reacting the components having isocyanate groups with the components having isocyanate-reactive groups. Temperatures in the range of from 30°C to 130°C are preferred and the reaction is continued until the reaction between the isocyanate groups and the isocyanate-reactive groups is substantially complete.

For a one stage process the relative amounts of components i), ii), iii) and or v) are preferably selected such that the mole ratio of isocyanate groups to isocyanate-reactive groups is in the range of from 1:1 to 1:2, more preferably 1:1.2 to 1:2. A two stage process may be utilised where a prepolymer is prepared either in solvent or as a melt, wherein the mole ratio of isocyanate groups to isocyanate-reactive groups is preferably from 1.1:1 to 2:1, more preferably from 1.4:1 to 2:1, followed by reacting any excess isocyanate end groups with component iv) and optionally component vi), either in solvent or as a melt.

Preferably the coloured, water-dissipatable polyurethane is not a chain-extended polyurethane. Although any residual isocyanate groups on the coloured, water-dissipatable polyurethane may on dissipation in water result in some chain-extension with water, preferably dissipation of the coloured, water-dissipatable polyurethane in water results in essentially no chain-extension. In other words, preferably the reaction does not comprise a step in which two or more polyurethane molecules are deliberately linked together in water by a chain-extender, wherein the chain-extender comprises a compound having two or three isocyanate-reactive groups.

If desired a catalyst may be used to assist formation of the coloured, water-dissipatable polyurethane. Suitable catalysts include butyl tin dilaurate, stannous octoate and tertiary amines as known in the art.

An organic solvent may optionally be included in the reaction mixture to lower its viscosity. Preferably a water-miscible solvent is used, for example N-methylpyrrolidinone, dimethyl sulphoxide, dimethylformamide, a dialkyl ether of a glycol acetate, methyl ethyl ketone, tetrahydrofuran (THF) or a mixture thereof.

The coloured, water-dissipatable polyurethane of the present invention may be purified if desired in the usual way for colorants used in ink-jet printing inks. For example a mixture of the coloured, water-dissipatable polyurethane and water may be purified by ion-exchange, filtration, reverse osmosis, dialysis, ultra-filtration, nanofiltration or a combination thereof. In this way one may remove co-solvents used for the polymerisation, low molecular weight salts, impurities and free monomers.

In a second aspect of the present invention there is provided an ink comprising a coloured, water-dissipatable polyurethane according to the first aspect of the present invention and a liquid medium. A preferred ink comprises:
(a) from 0.25 to 30 parts of a coloured, water-dissipatable polyurethane according to the first aspect of the present invention; and
(b) up to 99.75 parts of a liquid medium;
wherein all parts are by weight and (a)+(b)=100.

The number of parts of component (a) is preferably from 0.5 to 25, more preferably from 1 to 20, especially from 2 to 15 parts and most especially from 2.5 to 10 parts.

The inks according to the second aspect of the invention may be prepared by mixing the coloured, water-dissipatable polyurethane with the liquid medium. Suitable techniques are well known in the art, for example heating, agitation, ultrasonication or stirring of the mixture. The mixture of the coloured, water-dissipatable polyurethane and liquid medium may be in the form of a dispersion, emulsification, suspension, solution or mixture thereof.

Preferably the coloured, water-dissipatable polyurethane is mixed with a first liquid medium, followed by mixing the resultant mixture with a second liquid medium.

The liquid medium is preferably water, a mixture of water and an organic solvent and an organic solvent free from water. For example the coloured, water-dissipatable polyurethane may be added to water followed by the addition of one or more organic solvents. Preferably the first liquid medium is an organic solvent and the second liquid medium is water and a mixture of water and one or more organic solvents.

When the liquid medium comprises a mixture of water and an organic solvent, the weight ratio of water to organic solvent is preferably from 99:1 to 1:99, more preferably from 99:1 to 50:50 and especially from 95:5 to 60:40.

The organic solvent may be water-immiscible, water-miscible or a mixture of such solvents. It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, propane-1,3-diol, ethylene glycol, propylene glycol, butylene glycol, pentylene glycol, hexylene glycol and thiodiglycol and oligo- and polyalkyleneglycols, preferably diethylene glycol, diethylene glycol monobutyl ether, triethylene glycol, triethylene glycol monobutyl ether, propylene glycol monobutyl ether, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidinone, N-methyl-2-pyrrolidinone, N-ethyl-2-pyrrolidinone, caprolactam and 1,3-dimethylimidazolidone; cyclic esters, preferably caprolactone; urea; triethanolamine; glycerol; 1,3-dimethyltetrahydro-2-pyrimidone; sulphoxides, preferably dimethyl sulphoxide and sulpholane. Preferably the liquid medium comprises water and 2 or more, especially from 2 to 8, water-soluble organic solvents.

Especially preferred water-miscible organic solvents are cyclic amides, especially 2-pyrrolidinone, N-methyl-pyrrolidinone and N-ethyl-pyrrolidinone; urea; triethanolamine; glycerol; diol ethers especially diethylene glycol monobutyl ether, triethylene glycol monobutyl ether, propylene glycol monobutylether; diols, especially 1,5-pentane diol, propane-1,3-diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol.

Preferred water-miscible organic solvents are any of the hereinbefore described water-miscible organic solvents and mixtures thereof. Preferred water-immiscible solvents include, for example, aliphatic hydrocarbons; esters, preferably ethyl acetate; chlorinated hydrocarbons, preferably CH₂Cl₂; ethers, preferably diethyl ether; and mixtures thereof.

When the liquid medium comprises a water-immiscible organic solvent, preferably a polar solvent is included because this enhances solubility of the coloured polyurethane in the liquid medium. Examples of polar solvents include C₁₋₄-alcohols. In view of the foregoing preferences it is especially preferred that where the liquid medium is an organic solvent free from water it comprises a ketone (especially methyl ethyl ketone) and or an alcohol (especially a C₁₋₄-alkanol, more especially ethanol or propanol).

The organic solvent free from water may be a single organic solvent or a mixture of two or more organic solvents. It is preferred that when the medium is an organic solvent free from water it is a mixture of 2 to 5 different organic solvents. This allows a medium to be selected which gives good control over the drying characteristics and storage stability of the ink.

Ink media comprising an organic solvent free from water are particularly useful where fast drying times are required and particularly when printing onto hydrophobic and non-absorbent substrates, for example plastics, metal and glass.

A preferred liquid medium comprises:
(a) from 75 to 95 parts water; and
(b) from 25 to 5 parts in total of one or more solvents selected from diethylene glycol, 2-pyrrolidinone, thiodiglycol, N-methylpyrrolidinone, cyclohexanol, caprolactone, caprolactam, propane-1, 3-diol, hexane-1, 2-diol, polyethylene glycol and pentane-1,5-diol; wherein the parts are by weight and (a) + (b) = 100.

The ink may also contain a surfactant. This helps to dissipate the coloured polyurethane in addition to the dissipation caused by dispersing groups provided by component ii) of the coloured, water-dissipatable polyurethane. Optionally the ink may also contain other ingredients used in ink-jet printing inks, for example pigments such as carbon black, dyes, conductivity agents, defoamers, anti-oxidants, corrosion inhibitors, bacteriocides and viscosity modifiers.

The ink preferably has a pH of from 3 to 11, more preferably of from 4 to 10. Such a pH may be obtained by the addition of a base, acid or a pH buffer. Where a base is used this is preferably the same base as was used to neutralise the anionic dispersing group during the preparation of the coloured water-dissipatable polyurethane.

The viscosity of the ink is preferably ≤ 20 mPa.s, more preferably ≤ 10 mPa.s, and most preferably ≤ 6 mPa.s at 20°C.

Preferably the ink has been filtered through a filter having a mean pore size ≤10µm, preferably ≤ 5µm, more preferably ≤ 2µm and especially of 0.45µm. In this way particulate matter is removed which could otherwise block the fine nozzle in an ink-jet printer.

The surface tension of a liquid may be described as the attractive force exerted by molecules below the surface upon the molecules at the surface/air interface and its strength depends on the chemical nature of the liquid. Polar liquids such as water have a higher surface tension when compared with non-polar liquids such as ethanol.

The surface tension of ink-jet inks is a suitable feature for the evaluation of the usefulness of ink-jet inks. Ink-jet printer heads used in thermal or piezo ink-jet printing are designed to work with inks having specific surface tension, typically in the range of from 25 to 55 mN/m (dynes cm⁻¹). The surface tension of a liquid may easily be lowered by for example the addition of surfactants, however it is not easily raised and thus the surface tension should be at least as high as the value required for the ink-jet printer head to work effectively. Too low a surface tension results in poor print quality and or early failure of the ink-jet print head. The preferred surface tension for ink-jet inks used with piezo ink-jet printing heads is in the range of from 25 to 40 mN/m (dynes cm⁻¹) and for use with thermal ink-jet printing heads in the range of from 30 to 50 mN/m (dynes cm⁻¹).

Thus the coloured, water-dissipatable polyurethane of the invention, when dissipated in deionised water at 10% w/w and at room temperature (20 ± 3°C) preferably has a static surface tension ≥ 32 mN/m (dynes cm⁻¹), more preferably ≥ 35 mN/m (dynes cm⁻¹) and especially ≥ 42 mN/m (dynes cm⁻¹) when measured using the Dunoy Ring method on a Krass K10 instrument.

The static surface tension of the ink-jet ink of the invention when measured at room temperature is preferably ≥ 28 mN/m (dynes cm⁻¹). In particular the static surface tension of the ink-jet ink is preferably ≥ 35 mN/m (dynes cm⁻¹), more preferably ≥ 40 mN/m (dynes cm⁻¹) for use with a thermal ink-jet printing head and is preferably ≥ 28 mN/m (dynes cm⁻¹), more preferably ≥ 30 mN/m (dynes cm⁻¹) for use with a piezo ink-jet printing head.

Preferably the ink-jet ink of the second aspect of the present invention when printed on Xerox acid 4024 paper using an Epson Stylus 670 piezo ink-jet printer gives a solid area coverage with an optical density ≥ 0.5, preferably ≥ 0.7, more preferably ≥ 0.9 and most preferably ≥ 1.0.

The inks of the second aspect of the present invention have the advantage that they are suitable not only for the use of piezoelectric ink-jet printers but also for the use in thermal, continuous, electrostatic and micro electro mechanical ink-jet printers.

Inks of the second aspect of the present invention form discrete droplets on the substrate with little tendency for diffusing. Consequently sharp images with excellent print quality and little if any bleed between colours printed side by side can be obtained. Furthermore the inks show good storage stability, wet and light fastness and fastness to acidic neutral and alkaline highlighter pens.

A further aspect of the invention provides a process for printing an image on a substrate comprising applying thereto an ink containing a coloured water-dissipatable polyurethane of the present invention by means of an ink-jet printer.

The ink used in this process is preferably as defined in the second aspect of the present invention.

The ink-jet printer preferably applies the ink to the substrate in the form of droplets which are ejected through a small nozzle onto the substrate. Preferred ink-jet printers are piezoelectric ink-jet printers and thermal ink-jet printers. In thermal ink-jet printers, programmed pulses of heat are applied to the ink in a reservoir by means of a resistor adjacent to the nozzle, thereby causing the ink to be ejected in the form of small droplets directed towards the substrate during relative movement between the substrate and the nozzle. In piezoelectric ink-jet printers the oscillation of a small crystal causes ejection of the ink from the nozzle. Microelectromechanical ink-jet printing technology is described for example in WO 00/48938 and WO 00/55089 where ink is ejected from an ink ejection nozzle chamber utilising an electromechanical actuator connected to a paddle or plunger which moves towards the ejection nozzle of the chamber for the ejection of drops of ink from the ejection nozzle chamber and also in US 6042208 (microfluidic ink-jet printing).

The substrate is preferably paper, plastic, a textile, metal or glass, more preferably paper, an overhead projector slide or a textile material, especially paper.

Preferred papers are plain, coated or treated papers which may have an acid, alkaline or neutral character. Most preferably the substrate is a plain or coated paper.

According to a further feature of the invention there is provided an ink-jet printer cartridge containing an ink as hereinbefore defined.

The invention will now be described by example only. All parts and percentages are by weight unless specified otherwise.

### Dyes used in the preparation of coloured, water-dissipatable polyurethanes. Dye of Formula 3:

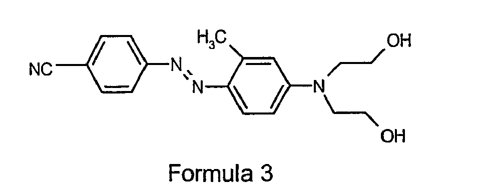

### Step 1

Concentrated hydrochloric acid (60 parts) in water (400 parts) was added dropwise to a mixture of 4-cyanoaniline (23.6 parts), acetone (300 parts) and 2N sodium nitrite (100 parts) while stirring and maintaining the temperature from 0 to 5°C. After 1 hour, 10% sulphamic solution was added to destroy any excess nitrous acid, resulting in a diazo mixture.

### Step 2

The diazo mixture prepared in Step 1 was added dropwise to a stirred mixture of N, N-dihydroxyethyl-m-toludine (45 parts) and acetone (200 parts) over 0.5 hours while maintaining the temperature at 0 to 5°C. After one hour sodium acetate was added to raise the pH to approximately pH 4 and the mixture was stirred for one hour, before the dye of Formula 3 (61.6 parts, Mwt of dye : 324, Mwt of chromophoric group with fully met valency: 292) was isolated by filtration, washed with water and dried at 70°C.

### Dye of Formula 4:

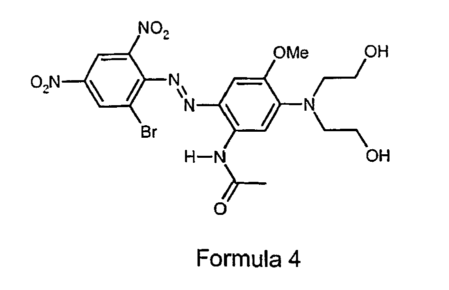

### Step 1

2-Bromo-4,6-dinitroaniline (26.2 parts) was added portion wise over 0.25 hours to a stirred mixture of nitrosyl sulphuric acid (25 parts of a 40% solution in sulphuric acid), acetic acid (126 parts) and propionic acid (24 parts) while maintaining the temperature at 0-5°C. The diazo mixture was stirred at 0-5°C for 1 hour.

### Step 2

A solution of 3-(N,N-di-β-hydoxyethyl)amino-4-methoxy acetanilide (26.8 parts) in a mixture of water (50 parts), methanol (150 parts) and sulfamic acid (1 part) was added to the stirred diazo mixture prepared in Step 1 over 0.5 hours while maintaining the temperature at 0-5°C. After 1 hour, solid sodium acetate was added to raise the pH to approximately pH 4 and the mixture was stirred over night at room temperature. The dye was isolated by filtration, washed with water and dried at 50°C to yield the dye of Formula 4 (39 parts, Mwt of dye: 541, Mwt of chromophoric group with fully met valency: 494).

### Dye of Formula 5:

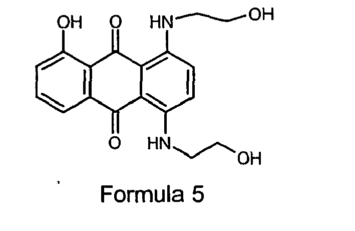

A mixture of 9,10-anthracenedione-2,3-dihydro-1,4,5-trihydroxy (CAS [36229-68-2] 25 parts), hydros (30 parts), monoethylamine (50 parts) and water (100 parts) was stirred at 75°C for 5 hours. The cooled mixture was filtered, the resultant solid washed with water and dried at 40°C.

This material was heated in 135°C in a mixture of nitrobenzene (200 parts) and piperidine (10 parts) for 4 hours. The mixture was cooled to room temperature and the dye of Formula 5 (Mwt of dye: 342, Mwt of chromophoric group with fully met valency: 310) was isolated by filtration, washed with ethanol and dried.

### Dye for Formula 6:

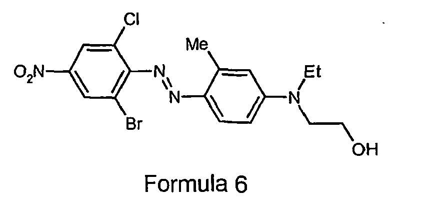

### Step 1:

6-Bromo-2-chloro-4-nitroaniline (25.1 parts, Lancaster) was added portion wise to a stirred mixture of acetic acid (168 parts), propionic acid (32 parts) and nitrosyl sulphuric acid (25 parts of a 40% solution in sulphuric acid) at 0-5°C. This mixture was then stirred for a further 1 hour at 0-5°C to give a diazo mixture.

### Step 2:

The diazo mixture prepared in Step 1 was added dropwise to a stirred mixture of N-ethyl-N-β-hydoxyethyl-m-toludine (18.7 parts, Aldrich), water (200 parts), sulfamic acid (5 parts) and methanol (400 parts) over 0.25 hours while maintaining the temperature at 0-5°C. After 1 hour, solid sodium acetate was added to raise the pH to approximately pH 4 and the mixture was stirred for 1 hour. The product was isolated by filtration, washed water and dried at 60°C to yield the dye of Formula 6 (42.4 parts, Mwt of dye: 441, Mwt of chromophoric group with fully met valency: 425).

### Dye of Formula 7

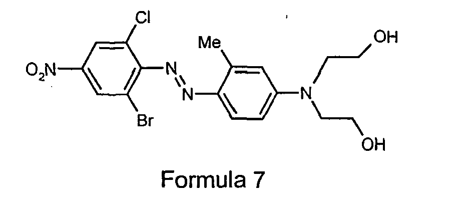

A dye of Formula 7 (Mwt of dye: 457, Mwt of chromophoric group: 423) was prepared in the same way as the dye of Formula 6 except that N,N-bis-β-hydroxyethyl-m-toludine is used instead of N-ethyl-N-β-hydroxyethyl-m-toludine in Step 2.

### Dye of Formula 8:

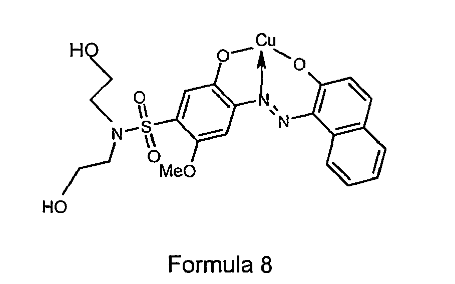

### Step 1

Sodium nitrite (2.62 parts) in water (85 parts) was added drop wise to a mixture of aniline-2-5-dimethoxy-4-sulphon-di-(2-hydroxyethyl)amide (12.03 parts), concentrated hydrochloric acid (10 parts) and water (75 parts) while stirring and maintaining the temperature at 0 to 5°C. After 30 min, 10% sulphamic acid was added to destroy any excess nitrous acid resulting in a diazonium salt solution.

### Step 2

The diazonium salt solution prepared in Step 1 was added drop wise to a stirred mixture of 2-naphthol (5.41 parts) and methanol (200 parts) over 0.5 hours with stirring while maintaining the temperature at 0 to 5°C. After 2 hours a 2 molar sodium hydroxide solution was added to raise the pH to 8.5 and the mixture was stirred for 1 hour, before the resultant monoazo dye was isolated by filtration, washed with water and dried at 50°C to yield the monoazo dye (15.88 parts).

### Step 3

A mixture of monoazo dye (9.5 parts) prepared in Step 2, copper sulphate (4.99 parts) and N-methylpyrrolidone (100 parts) were stirred at 130°C for 4.5 hours, sodium acetate (1.6 parts) was added and the mixture was stirred for 1 hour and then cooled to room temperature, before the resultant metallised dye was isolated by filtration, washed with water and dried at 50°C to yield (2.5 parts of Formula 8, Mwt of dye: 547, Mwt of chromophoric group with fully met valency: 515).

### Dye of Formula 9:

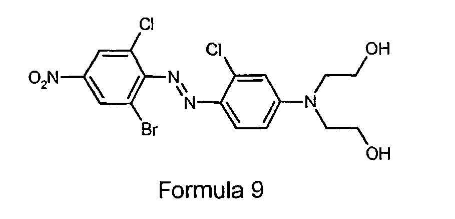

A sample of Cl Disperse Brown 4 (Dispersol Brown D-3R, BASF Colours, Mwt of dye: 459, Mwt of chromophoric group with fully met valency: 427) was purified by extraction into ethyl acetate, washed with water and isolated by evaporating the ethyl acetate.

### Dye of Formula 10

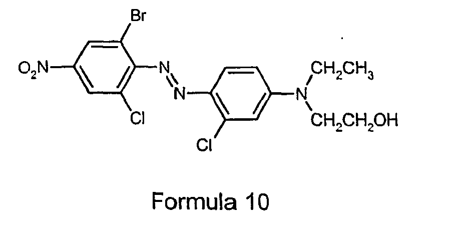

### Step 1

Sodium carbonate (76.0 parts) was dissolved in water (400 parts) and added 3-chloroaniline (153 parts). The mixture was stirred vigorously and 2-chloroethyl chloroformate (172.8 parts) added drop wise at room temperature over 0.5 hour during which time the temperature increased to 70°C. The mixture was stirred for 1 hour when HPLC analysis indicated that no starting material remained.

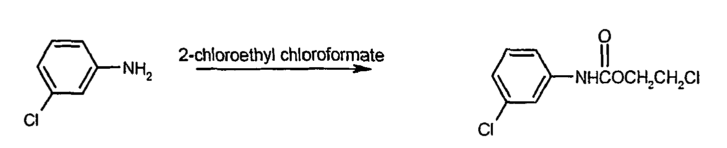

### Step 2

A solution of sodium hydroxide (162 parts) in water (200 parts) was added carefully to the mixture obtained in Step 1 and the resulting mixture stirred at 100°C for 1 hour when HPLC analysis indicated that the conversion was complete. The reaction mixture was cooled to room temperature and diethyl ether (200ml) added. The ether layer was run off, dried over anhydrous magnesium sulphate and filtered. The diethyl ether was removed on the rotary evaporator to yield N-(2-hydroxyethyl)-3-chloroaniline as a golden yellow oil (180.4 parts).

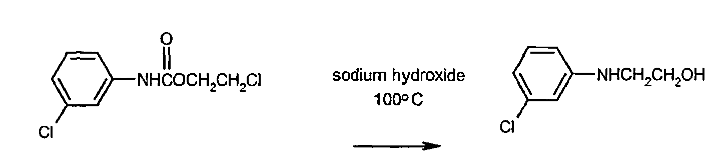

### Step 3

The N-(2-hydroxyethyl)-3-chloroaniline prepared in Step 2 was dissolved in sulpholane (500 parts) and magnesium oxide (80 parts) added. The mixture was heated to 170°C and ethyl bromide (134 parts) added drop wise over 2 hours. Heating and stirring was continued for 4 hours when no starting material was detected by HPLC. After cooling to room temperature the reaction mixture was poured into water and extracted with diethyl ether (2 x 200 parts). The ether solution was washed with water, dried over anhydrous magnesium sulphate and filtered. The diethyl ether was removed on the rotary evaporator to yield N-ethyl-N-(2-hydroxyethyl)-3-chloroaniline as a golden yellow oil (163 parts).

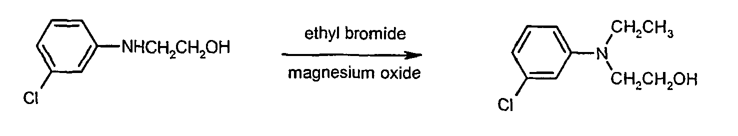

### Step4

A mixture of acetic acid and propionic acid, 84/16 (50 parts) was stirred at 0-5°C. Nitrosyl sulphuric acid (7.5 parts) was added drop wise maintaining the temperature at 0-5°C throughout. 2-Bromo-6-chloro-4-nitroaniline (7.5 parts) was added portionwise over 0.5 hours at 0-5°C and the mixture stirred for 1 hour to give a pale yellow solution of a diazo component.

### Step 5

N-ethyl-N-(2-hydroxyethyl)-3-chloroaniline (6.6 parts) prepared in Step 3 was dissolved in a mixture of acetone (100 parts) and water (50 parts), added sulphamic acid (0.5 parts) and cooled to 0-5°C. The diazo solution prepared in Step 4 was added drop wise over 0.5 hour to give a brown suspension. After stirring for 1.0 hour the coupling mixture was diluted with water (100 parts) and adjusted to pH 4.0 by addition of sodium acetate. The precipitated product was filtered off, washed with water, pulled dry and dried in a vacuum oven at 50°C to yield 12.9 parts of brown azo dye of Formula 10 (Mwt of dye: 443, Mwt of chromophoric group with fully met valency: 426).

### Dye of Formula 11

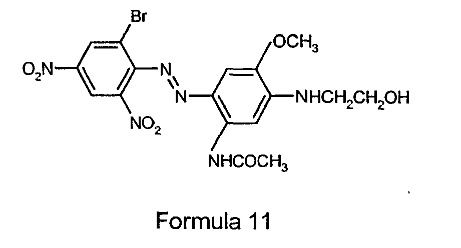

### Step 1

Sodium carbonate (53.0 parts) was dissolved in water (250 parts) and 3-amino-4-methoxyacetanilide (90 parts) was added. The mixture was stirred vigorously and 2-chloroethyl chloroformate (81 parts) was added drop wise at room temperature over 1 hour during which time a slight exotherm was observed. The mixture was stirred for 2 hours when HPLC analysis indicated that the reaction was complete.

A solution of sodium hydroxide (162 parts) in water (200 parts) was added carefully and the resulting mixture stirred at 100° C for 1 hour when HPLC analysis indicated that the conversion was complete. The resulting grey solid was filtered off washed with water and dried at 40°C to yield 128 parts.

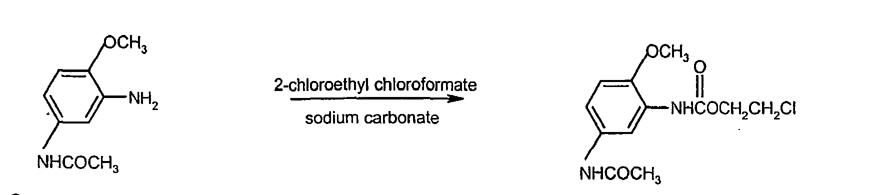

### Step 2

A solution of sodium hydroxide (64.0g) in water (600ml) and 2-chloroethyl-5-(acetylamino)-2-methoxyphenylcarbamate (128 parts) was added to the solid obtained in Step 1. The mixture was stirred at 100° C for 1 hour when HPLC analysis indicated that no starting material remained. The reaction mixture was cooled to room temperature, filtered, washed with water and dried at 40° C to give 51.56 parts of 3-(2-hydroxyethyl)-4-methoxyacetanilide.

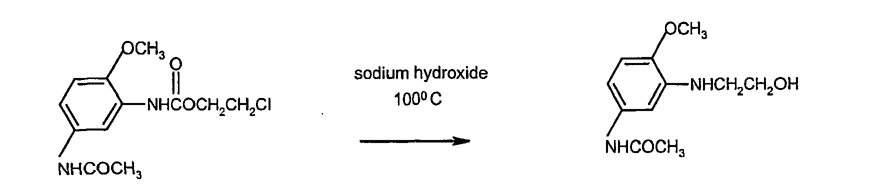

### Step 3

A mixture of acetic acid and propionic acid, 84/16 (30 parts) was stirred at 0-5°C. Nitrosyl sulphuric acid (5.0 parts) was added drop wise maintaining the temperature at 0-5°C throughout. 2,4-Dinitro-6-bromoaniline (5.24 parts) was added portionwise over 0.5 hour at 0-5°C and the mixture stirred for 2 hours to give a pale yellow diazo solution.

### Step 4

3-(2-Hydroxyethyl)-4-methoxyacetanilide (4.48 parts) prepared in Step 2 was dissolved in a mixture of methanol (100 parts) and water (20 parts), added sulphamic acid (0.5 parts) and cooled to 0-5°C. The diazo solution prepared in Step 3 was added drop wise over 0.5 hours to give a brown suspension. After stirring for 1.0 hour the coupling mixture was diluted with water (100 parts) and adjusted to pH 4.0 by addition of sodium acetate.
The precipitated product was filtered off, washed with water, pulled dry and dried in a vacuum oven at 50°C to give 2.6 parts of the dye of Formula 11 (Mwt of dye: 497, Mwt of chromophoric with fully met valency: 453).

### Preparation of coloured water-dissipatable Polyurethanes

### Examples 1 to 8

The preparation of coloured, water-dissipatable polyurethanes for examples 1 to 8 were carried out as described below in stage 1, stage 2 (ex 4, 7,8) and stages 3 and 4.

The components for examples 1 to 8 and the properties of the resultant coloured, water-dissipatable polyurethanes are shown below in Table 1. Component 7, a non-ionic dispersant was prepared according to Example 4 in EP 317258 B1.

### Stage 1:

Components 1 to 6 were charged to a stirred reaction vessel under a nitrogen atmosphere and heated to 100°C and component 8 was added as a solution in 10g N-methyl pyrrolidinone over 2.5 hours. The reaction mixture was maintained from 95 to 102°C for 4 hours. A sample of the reaction mixture (6 to 8g) was removed to determine the percentage isocyanate (% NCO) content.

### Stage 2: [Examples 4, 7 and 81

To a portion of the reaction mixture from Stage 1 (82g for example 4, 69g for Example 7 and 89g for Example 8) component 9 was added as a 50% solution in N-methyl pyrrolidinone and left to react for 15 minutes at 100°C.

### Stage 3:

The product from Stage 1 (or stage 2 for examples 4, 7 or 8) at 100°C was added to water initially at 30°C. During this addition an exotherm may be observed. The mixture was stirred for a further one hour, cooled to room temperature and filtered through a 50µm cloth filter. The pH and solids content of the product of Stage 3 were measured and are shown in below Table 1.

The molecular weight distribution of the resultant coloured polyurethane was measured by gel permeation chromatography (GPC) to give the weight average molecular weight, Mw, and a number average molecular weight, Mn as indicated in Table 1 below.

### Stage 4:

The product from Stage 3 was filtered through a cascade of filters (glass microfibre GF/A, GF/F and membrane) to 0.45 micron and then purified by reverse osmosis using a 3000 MW cut off membrane (until the effluent had a conductivity of < 100 µS/CM) - and evaporated to dryness at approximately 70°C. The surface tension of a 10% solution in deionised water of the resultant coloured polyurethane polymers was measured using the Dunoy Ring method on a Krass K10 instrument at 20± 3°C.

**Table 1**

| **Component** | | **Example** | | | | | | | | |
|---|---|---|---|---|---|---|---|---|---|---|
| | | 1 | 2 | 3 | 4 | 5 | 6 | 7 | 8 | 11 |
| 1 | Isphorone diisocyanate | 5.5 | 2.7 | 13.0 | 11.5 | 10.5 | 9.18 | 13.0 | 10.5 | 1.2 |
| 2 | Dye of Formula 3 | 8.0 | 3.0 | - | - | - | - | - | - | - |
| 3 | Dye of Formula 4 or 8* | - | - | 17.5 | 17.5 | 17.5 | 17.5 | 17.5 | 17.5 | 1.59* |
| 4 | EGSSIPA | 6.5 | 4.3 | 19.5 | 20.95 | 22.0 | 10.8 | 19.5 | 22.0 | 1.76 |
| 5 | N-methyl pyrrolidinone | 37.1 | 24.4 | 110.6 | 118.7 | 124.8 | 61.3 | 110.6 | 124.9 | 9.97 |
| 6 | DABCO | 0.1 | 0.05 | 0.25 | 0.25 | 0.25 | 0.25 | 0.25 | 0.25 | 0.023 |
| 7 | Dispersant | - | - | - | - | - | 12.5 | - | - | - |
| 8 | DABCO | 0.3 | 0.15 | 0.75 | 0.75 | 0.75 | 0.75 | 0.75 | 0.75 | 0.067 |
| 9 | Methoxyethylamine | - | - | - | 0.73 | - | - | 0.61 | 0.79 | - |
| **Results** | | | | | | | | | | |
| NCO % | | 0.2 | 0.1 | 0.5 | 0.5 | 0.5 | 0.7 | 0.5 | 0.5 | 0.2 |
| Solids Content % | | 11.95 | 11.96 | 11.9 | 11.44 | 12.05 | 9.9 | 11.7 | 11.1 | 12.0 |
| pH | | 9.3 | 9.5 | 6.3 | 8.7 | 6.3 | 6.4 | 8.5 | 8.8 | 8.2 |
| Mw | | 16,200 | 17,100 | 11,550 | 13,465 | 12,334 | 14,786 | 15,708 | 12,350 | 10,147 |
| Mn | | 11,900 | 12,700 | 11,350 | 9,935 | 9,440 | 10,707 | 11,256 | 9,289 | 6,872 |
| Surface tension dynes cm⁻¹ | | 40 | 41 | 49 | 36 | 37 | 43 | 49 | 34 | 36 |

| | | | | | | | | | | |
|---|---|---|---|---|---|---|---|---|---|---|
| KEY: EGSSIPA = bis(2-hydroxyethyl)-5-sodio sulphoisopthalate DABCO = 1,4-Diazabicyclo[2.2.2]octane | | | | | | | | | | |

### Example 9

### Stage 1:

Isophorone diisocyanate (3.6g), dye of Formula 5 (5.3g), EGSSIPA (6.1g), N-methylpyrrolidinone (34.7g) and DABCO (0.075g) were charged to a reaction vessel under a nitrogen atmosphere, stirred and heated to 100°C. No exotherm was observed. DABCO (0.225g in N-methylpyrrolidinone, 5g) was added over 2.5 hours.

The reaction mixture was maintained at 95-102°C for a total of 3 hours. A sample of the reaction mixture (8.63g) was removed to determine the %NCO content which was found to be 0.2% NCO.

### Stage 2:

The polymer solution (45.4g) from Stage 1 at 100°C was dispersed into 80.8g of stirred distilled water initially at 30°C. During the addition of the polymer solution to the water the temperature of the water rose to about 50.4°C. The resultant dispersion was stirred for a further one hour, cooled to room temperature and filtered through a 50 µm cloth filter.

The filtered dispersion of the coloured polyurethane was found to have a solids content of 12.30% and a pH of 9.73. Molecular weight distribution was determined by gel permeation chromatography giving Mw = 13200 and Mn = 9203.

### Stage 3:

The filtered dispersion from stage 2 was further filtered through a cascade of filters (Glass microfibre GF/A, GF/f and membrane) and 0.45 micron and then purified by reverse osmosis using a 3000 MW cut off membrane and evaporated to dryness at approximately 70°C.

### Example 10

### Stage 1:

Isophorone diisocyanate (111.7g), dye of Formula 7 (40.8g), EGSSIPA (87.5g), N-methylpyrrolidinone (495.9g) and DABCO (1.2g) were charged to a reaction vessel under a nitrogen atmosphere, stirred, and heated to 100°C. A 2.6°C exotherm was observed. DABCO (3.6g in N-methylpyrrolidinone, 30g) was added over 2.5 hours.

The reaction mixture was maintained at 95-102°C for a total of three hours. A sample of the reaction mixture (9.7g) was removed to determine the %NCO content which was found to be 2.0% NCO.

The reaction mixture was cooled to room temperature before adding dye of Formula 6 (112.6g), methoxypolyethylene glycol 350 (29.8g) and DABCO (3.6g). The mixture was reheated to 95-102°C for one hour before adding methoxypolyethylene glycol 350 (11.9g) and DABCO (3.6g) and heating at 95-102°C for a further hour.

### Stage 2:

The polymer solution (868.7g) from Stage 1 at 100°C was dispersed into 2912.8g of stirred distilled water initially at 30°C. During the addition of the polymer solution to the water the temperature of the water rose to about 43.1°C. The resultant dispersion was stirred for a further one hour, cooled to room temperature and filtered through a 50µm cloth filter.

The filtered dispersion of the coloured polyurethane was found to have a solids content of 10.84% and a pH of 9.45. Molecular weight distribution was determined by gel permeation chromatography giving Mw = 12398 and Mn = 7806.

### Stage 3:

The filtered dispersion from Stage 1 was further filtered through a cascade of filters (Glass microfiblre GF/A, GF/F and membrane) to 0.45 micron and then purified by reverse osmosis sing a 3000 MW cut off membrane and evaporated to dryness at approximately 70°C.

### Preparation of coloured water-dissipatable polyurethanes chain-terminated with a colourant

### Examples 12 to 16

Preparation of coloured polyurethanes for examples 12 to 16 were carried out as described below in stages 1), 2), 3) and 4).

The components for examples 12 to 16 and the properties of the resultant polymers are shown below in Table 2.

### Stage 1

Components 1,2,3,4 and 5 were charged to a stirred reaction vessel under a nitrogen atmosphere and heated to 100°C. No exotherm was observed. Component 6 was added (as a solution in 9.31g N-Methylpyrrolidinone) over 2.5 hours. The reaction mixture was maintained at 95-102°C for a total of three hours. A sample of the reaction mixture (9.10g) was removed to determine the %NCO content.

### Stage 2

The reaction mixture was then cooled to room temperature. Components 7,8 and 9 were then added to a small portion of the polymer (30.99g) which was then reheated back to 95 to 102°C. After one hour, components 10 and 11 were added and the mixture was then left for a further hour at 95 to 102°C.

### Stage 3

The polymer solution (36.07g) at 100°C was dispersed into 116.62g of stirred distilled water initially at 30°C. During the addition of the polymer to the water the temperature of the water rose to about 43.1°C. The dispersion was stirred for a further one hour, cooled to room temperature and filtered through a 50µm cloth filter.

The solids content and the pH of the dispersion was measured and the molecular weight distribution was determined by gel permeation chromatography.

### Stage 4

The polymer solution from Stage 3 was filtered through a cascade of filters (Glass microfibre GF/A, GF/F and membrane) to 0.45 micron and then purified by nanofiltration using a 12000 Daltons cut off membrane and freeze dried.

The surface tension of a 10% solution in deionised water of the resultant coloured polyurethane polymers was measured using the Dunoy Ring method on a Krass K10 instrument at room temperature (20 ± 3°C).

**Table 2**

| Component (g) | | Examples | | | | |
|---|---|---|---|---|---|---|
| | | 12 | 13 | 14 | 15 | 16 |
| 1 | Isphorone diisocyanate | 32.4 | 32.4 | 32.4 | 32.4 | 9.11 |
| 2 | Dye of Formula 9 or 4* | 11.9 | 11.9 | 11.9 | 11.9 | 3.4* |
| 3 | EGSSIPA | 25.7 | 25.7 | 25.7 | 25.7 | 7.49 |
| 4 | N-Methylpyrrolidinone | 145.7 | 145.7 | 145.7 | 145.7 | 42.44 |
| 5 | DABCO | 0.35 | 0.35 | 0.35 | 0.35 | 0.1 |
| 6 | DABCO | 1.05 | 1.05 | 1.05 | 1.05 | 0.3 |
| 7 | Dye Formula 6 or 11* | 3.86 | 4.15 | 4.24 | 4.33 | 7.74* |
| 8 | Methoxy polyethylene glycol 350 | 3.06 | 1.1 | 0.46 | - | 1.82 |
| 9 | DABCO | 0.15 | 0.15 | 0.15 | 0.15 | 0.15 |
| 10 | Methoxy polyethylene gylcol 350 | 0.61 | 0.44 | 0.38 | - | 0.73 |
| 11 | DABCO | 0.15 | 0.15 | 0.15 | 0.15 | 0.15 |
| Results | | | | | | |
| NCO% | | 1.7 | 1.71 | 1.7 | 1.7 | 2.4 |
| Solids Content % | | 10.77 | 11.06 | 11.34 | 11.61 | 9.36 |
| pH | | 9.4 | 9.7 | 9.95 | 10.0 | 8.5 |
| Mw | | 18,924 | 19,152 | 17,416 | 16,384 | 10,317 |
| Mn | | 12,516 | 12,621 | 11,256 | 10,177 | 7,686 |
| Surface tension mN/m (dynes cm⁻¹) | | 51 | 54 | 55 | 56 | 53 |

### Example 17:

Isophorone Diisocyanate (32.39g), Dispersol Brown D-3R (11.90g), EGSSIPA (25.71g), N-Methylpyrrolidone (145.69g) and DABCO (0.35g) were charged to a stirred reaction vessel under a nitrogen atmosphere and heated to 100°C. No exotherm was observed. DABCO (1.05g) was added (as a solution in 9.31g N-Methylpyrrolidinone) over 2.5 hours. The reaction mixture was maintained at 95-102°C for a total of three hours. A sample of the reaction mixture (9.10g) was removed to determine the %NCO content which was found to be 1.7% NCO.

The reaction mixture was then cooled to room temperature. The dye of Formula 10 (4.33g) and DABCO (0.15g) were then added to a small portion of the polymer (24.23g) which was then re-heated back to 95 - 102 °C. After one hour, DABCO (0.15g) was added and the mixture was then left for a further hour at 95 - 102°C.

The polymer solution (27.74g) at 100°C was dispersed into 90.14g of stirred distilled water initially at 30°C. During the addition of the polymer to the water the temperature of the water rose to about 41.4°C. The dispersion was stirred for a further one hour, cooled to room temperature and filtered through a 50µm cloth filter.

The dispersion was found to have a solids content of 11.61 % and a pH of 10.01. Molecular weight distribution was determined by gel permeation chromatography giving Mw = 16384 and Mn = 10177.

### Example C18

### Stage 1:

Isophorone Diisocyanate (119.6g), dye of Formula 3 (100.0g), EGSSIPA (33.3g), polyethylene glycol of molecular weight 1000 (80.3g), N-methylpyrrolidinone (283.3g) and DABCO (1.7g) were charged to a reaction vessel under a nitrogen atmosphere and heated to 100°C. A 2°C exotherm was observed. DABCO (5.0g as a solution in 50g N-methylpyrrolidinone) was added over 2.5 hours.

The reaction mixture was maintained at 95 to 102°C for a total of 4.5 hours. A sample of the reaction mixture (4.7g) was removed to determine the %NCO content which was found to be 2.0% NCO.

Methoxy polyethylene glycol 350 (121.7g) and DABCO (1.2g) was added to the reaction mixture. More DABCO (1.2g) was added one hour later. The temperature was maintained at 95 to 100 °C for 2.0 hours.

### Stage 2:

The resultant polymer solution (774.9g) at 100°C was dispersed into 3752g of stirred distilled water initially at 30°C. During the addition of the polymer to the water the temperature of the water rose to about 39.2°C. The dispersion was stirred for a further one hour, cooled to room temperature and filtered through a 50µm cloth filter.

The filtered dispersion of the coloured polyurethane was found to have a solids content of 9.52% and a pH of 8.25. Molecular weight distribution was determined by gel permeation chromatography giving Mw = 25393 and Mn = 10515.

### Stage 3:

The 'crude' polymer solution from Stage 2 was filtered through a cascade of filters (Glass microfibre GF/A, GF/F and membrane) to 0.45 micron and then purified by reverse osmosis using a 3000 MW cut off membrane and evaporated to dryness at approximately 70°C.

The surface tension was measured using a 10% solution in deionised water and was found to be 24 dymes/cm.

### Preparation of inks A to T

An ink containing the coloured, water-dissipatable polyurethane described in Example 1 was prepared in a stock solution of water (90 parts) and N-methylpyrrolidinone (10 parts) and the resultant solution was filtered through a 0.45 micron membrane filter. The resultant ink was printed onto Xerox acid 4024 plain paper using a Hewlett Packard (HP) 560 thermal ink-jet printer to give test prints. Inks containing the coloured water-dissipatable polyurethanes described in Examples 2 to 17 were prepared in a stock solution of diethylene glycol monobutylether (10 parts), glycerol (9 parts), 2-pyrrolidinone (4 parts), Surfynol 465 (0.5 parts), triethylethanol amine (0.6 parts), diethylene glycol (0.8 parts) and water (75.1 parts). The inks were filtered through a 0.45 micron membrane filter and printed onto Xerox acid 4024 plain paper using an Epson Stylus 670 ink-jet printer operating at 1440 dpi. The properties of the resultant test prints are shown below in Table 3. An ink similarly prepared from the coloured polyurethane described in Example C18 could not be printed successfully.

### Highlighter test:

The prints prepared above were tested for smear resistance to one or more highlighter pens. Yellow highlighter pens (acid, neutral or alkaline) were used to draw a horizontal line across the series of printed vertical bars. The amount of ink smear on the white paper between the vertical bars was assessed visually all examples were fast to highlighter pens.

### Wet Fastness

Wet fastness is determined as follows; 0.5 cm³ of water is run down the test prints prepared above, immediately after printing. The scale is from 1 to 10 with 1 not being fixed at all and 10 being fully fixed i.e. producing no stain on the white paper.

### Colour co-ordinates, lightness and optical density

Colour coordinates L, a, b, and the optical density of the prints were measured using an X-rite 938 spectrophotometer and the results are shown in Table 2 below.

The optical density is a measure of colour strength on a logarithmic scale.

The colour coordinates define the brightness and colour on a colour scale, where 'a' is a measure of redness (+a) or greenness (-a) and 'b' is a measure of yellowness (+b) or blueness (-b). The coordinates 'a' and 'b' approach zero for neutral colours (white, greys and blacks). The higher the values for 'a' and 'b' are, the more saturated a colour is.

The lightness 'L' is measured on a scale from 0 (white) to 100 (black).

### Light Fastness

Light-fastness was measured by covering half of a print sample with aluminium foil and exposing the sample in an Atlas Ci 35 Weatherometer for 100 hours. The colour difference between the exposed and unexposed print was measured using an X-Rite 938 spectrodensitometer and expressed as ΔE = v (ΔL² + Δa² + Δab²). The lower the value ΔE the better the light-fastness was.

For ink J the ΔE was 4 at 50 hours and 7.6 at 100 hours, for ink K the ΔE was 1.1 at 50 hours and 1.77 at 100 hours and for ink R the ΔE was 6.11 at 50 hours.

### Surface tension of the inks

The inks formulated as described above were formulated to have a surface tension of 34 to 35 mN/m (dynes cm⁻¹) as measured using the Dunoy Ring method with a Krass K10 at room temperature (20± 3°C).

### Viscosity of the inks

Ink viscosities were measured on a Brookfield DVII+ viscometer, using an ultra low viscosity sample adapter with spindle S00, at 37s⁻¹ and at 20±3°C and the viscosities obtained were in the range of from in the range of from 3.1 mPas to 5.2 mPas.

**Table 3**

| Ink | Polymer Example | % Polymer in Ink | OD | L | a | b | Run Down |
|---|---|---|---|---|---|---|---|
| A | 2 | 15% | 1.352 | 58.44 | 47.97 | 57.97 | 9-10 |
| B | 1 | 7.5 | 1.03 | 63.13 | 30.07 | 45.66 | 9 |
| C | 3 | 7.5 | 1.00 | 41.44 | -0.55 | -16.85 | 9 |
| D | 4 | 7.5 | 1.12 | 37.44 | -1.40 | -14.00 | 8 |
| E | 5 | 7.5 | 1.19 | 34.27 | -0.12 | -12.96 | 9 |
| F | 6 | 7.5 | 0.88 | 45.2 | -2.1 | -18.7 | 8 |
| G | 7 | 7.5 | 0.887 | 46.30 | -0.72 | -9.24 | 9 |
| H | 8 | 7.5 | 0.998 | 42.64 | -1.99 | -10.79 | 9 |
| I | 8 and 10 in a 6:4 ratio | 12 | 1.24 | 28.7 | 2.54 | -4.07 | 8 |
| J | 9 and 10 in a 4:3 ratio | 10 | 1.07 | 36.7 | 1.24 | -6.04 | 10 |
| K | 5 and 10 in a 3:2 ratio | 10 | 1.1 | 33.5 | 1.87 | -4.35 | 9 |
| L | 9 and 10 in a 3:2 ratio | 10 | 1.07 | 36.7 | 1.24 | -6.04 | 10 |
| M | 9 | 10 | 1.0 | 41.65 | 7.99 | -38.00 | 10 |
| N | 11 | 10 | 1.03 | 39.0 | 17.42 | -13.2 | 8 |
| O | 12 | 10 | 0.97 | 46.45 | 14.89 | 12.74 | 8 |
| P | 13 | 10 | 1.07 | 45.09 | 24.17 | 16.94 | 10 |
| Q | 14 | 10 | 1.15 | 42.18 | 24.87 | 16.52 | 10 |
| R | 15 | 10 | 1.07 | 44.06 | 27.39 | 17.43 | 10 |
| S | 17 | 10 | 1.0 | 44.06 | 27.39 | 17.43 | 10 |
| T | 16 | 4 | 1.0 | 40.1 | 7.1 | -19.0 | 10 |

All the inks prepared using polymer Examples 1 to 17 were fast to highlighter pens and were dry rub fast (i.e. not erasable). A control using a standard black dye available commercially with the Epson Stylus 670 printer had an optical density of 1.26, but only a run down of 6 and was not fast to highlighter pens.

Further inks may be prepared having the formulations described in Table 4 below wherein the following abbreviations are used. Water is included in each formulation to make the total number of parts up to 100. These inks may be applied to plain paper using an ink-jet printer.
- FRU: : fructose
- PU*: : Identifies which of the coloured water-dissipatable polyurethanes as prepared in examples 1 to 17 may be used. The number of parts by weight of PU is shown in brackets.
- BZ: : Benzyl alcohol
- DEG: : Diethylene glycol
- DMB: : Diethyleneglycol monobutyl ether
- ACE: : Acetone
- IPA: : Isopropyl alcohol
- MEOH: : Methanol
- 2P: : 2-Pyrrolidinone
- MIBK: : Methylisobutyl ketone
- SUR: : Surfinol 465 (a surfactant)
- TEN: : Triethanolamine
- NMP: : N-methylpyrolidinone
- BUT: : Butylcellosolve
- GLY: : Glycerol
- PIG: : Carbon black pigment IJX 157 (available from Cabot)

**Table 4**

| PU* (parts) | BZ | DE G | ACE | NaO H | (NH₄)₂SO₄ | IPA | MEOH | 2P | MIBK | GLY | NMP | BUT | FRU | SUR | TEN PIG |
|---|---|---|---|---|---|---|---|---|---|---|---|---|---|---|---|
| 1(16) | | 6 | 4 | | | | | | 9 | 1 | 2 | 1 | | 1 | 1 |
| 8(8) | 6 | 4 | | 0.2 | | | | 10 | | | | | 1 | | 1 |
| 2(5) | 8 | | 1 | | | | | 5 | 1 | 3 | 15 | 2 | | | 3 |
| 3(6) | | 9 | | 0.5 | 0.5 | | | 9 | 5 | | | 1 | | | |
| 1(5) | 15 | 3 | 3 | | | 5 | | 3 | 4 | | | | | | |
| 5(12) | 19 | | | | | 8 | | | | 2 | 2 | | 1 | | 2 |
| 4(5) | 4 | | 4 | | | | 6 | 15 | 4 | | | 2 | | | |
| 11(14) | 5 | 2 | 10 | 0.1 | 0.3 | | | | | | 7 | | | 1 | 1 |
| 7(4) | 5 | 3 | 6 | | | 5 | 5 | 6 | 5 | | | | | | |
| 6(9) | 7 | 2 | 2 | | | 2 | | 4 | | 4 | | | | | |
| 12(14) | 5 | | | | | | | 12 | | | | 5 | 2 | | |
| 9(12) | | | 8 | | | | 2 | | 6 | | 5 | 2 | | | 1 |
| 13(5) | 10 | | 7 | 0.3 | | 3 | | 10 | | 1 | | | | | |
| 10(5) | 18 | 2 | 1 | | | | | 13 | 2 | | 3 | | 1 | 2 | |
| 17(7) | 5 | 2 | | | 0.1 | | | 14 | | | 10 | 1 | | | |
| 7(10) | | 1 | | | | | | 3 | 1 | 1 | 3 | | 3 | 2 | |
| 15(3) | 2 | | 3 | | 0.1 | | 3 | 2 | | | 10 | | | | |
| 16(5) | | 2 | | 0.2 | | 3 | | 1 | 2 | | | 1 | 2 | 4 | 2 |
| 8(3) | 1 | | 4 | | 0.2 | | | | | 1 | 5 | | | | 2 |
| 4(12) | | 5 | | 0.1 | | | 2 | 1 | 3 | | | 2 | 1 | | 4 |
| 3(10) | 16 | | 1 | | | 4 | | 2 | 6 | | 6 | | | | |
| 14(10) | | 1 | | | 0.1 | | | 4 | 9 | 2 | | | 4 | | 1 |
| 10(8) | 3 | 1 | | 0.2 | | 2 | | 10 | | | 4 | | | 6 | 3 |
| 7(11) | | | 2 | | 0.1 | | 1 | | 1 | | | 2 | 1 | | 1 |

## Claims

1. A coloured, water-dissipatable polyurethanes having a weight average molecular weight ≤ 30,000 Daltons, obtained from the reaction of components comprising:
i) of from 5 to 50% by weight of at least one organic polyisocyanate;
ii) of from 15 to 50% by weight of at least one compound providing ionic water-dispersing groups having two or more isocyanate-reactive groups selected from -OH, -NH₂, -NH- and -SH groups;
iii) of from 15 to 50% by weight of at least one colorant having two or more functional groups selected from isocyanate groups and isocyanate-reactive groups;
iv) of from 0 to 35% by weight of at least one colorant having one functional group selected from isocyanate groups and isocyanate-reactive groups;
v) of from 0 to 10% by weight of at least one compound having two or more isocyanate-reactive groups other than as in ii) or iii);
vi) of from 0 to 10% by weight of at least one compound having one isocyanate-reactive group other than as in iv);
wherein components iii) and iv) add up to at least 18% and components i), ii), iii), iv), v) and vi) add up to 100%.

2. A coloured, water-dissipatable polyurethane according to claim 1 chain-terminated with a colorant obtained from the reaction of components comprising:
i) of from 5 to 50% by weight of at least one organic polyisocyanate;
ii) of from 15 to 50% by weight of at least one compound providing ionic water-dispersing groups having two or more isocyanate-reactive groups selected from -OH, -NH₂, -NH- and -SH groups;
iii) of from 15 to 40% by weight of at least one colorant having two or more functional groups selected from isocyanate groups and isocyanate-reactive groups;
iv) of from 5 to 35% by weight of at least one colorant having one functional group selected from Isocyanate groups and isocyanate-reactive groups; and
v) of from 0 to 10% by weight of at least one compound having two or more isocyanate-reactive groups other than as in ii) or iii);
vi) of from 0 to 10% by weight of at least one compound having one isocyanate-reactive group other than as in iv);
wherein components i), ii), iii), iv), v) and vi) add up to 100%.

3. A coloured, water-dissipatable polyurethane according to claim 2 comprising a coloured, water-dissipatable polyurethane of Formula 2; 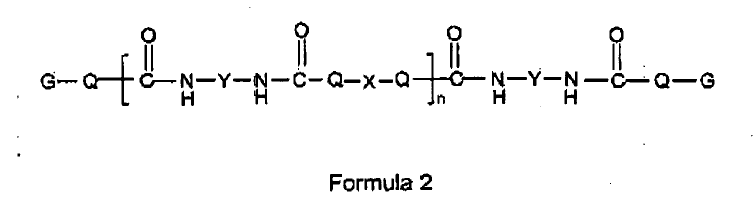 wherein:
X is a residue independently derived from components ii), iii) and or v);
Q is independently selected from O, NH, NR and or S;
Y is a residue derived from component i);
G is a residue derived from component iv) and optionally component vi); and
n is an integer from 1 to 60.

4. A coloured, water-dissipatable polyurethane according to any one of the preceding claims wherein at least one compound providing ionic water-dispersing groups Is a diol having one or more carboxylic acid or sulfonic acid groups or a diol having quaternary ammonium groups.

5. A coloured, water-dissipatable polyurethane according to any one of the preceding claims having a weight average molecular weight ≤ 25,000.

6. A coloured, water-dissipatable polyurethane according to any one of the preceding claims comprising of from 15 to 49 wt % of component ii).

7. A coloured, water-dissipatable polyurethane according to claim 1 wherein components iii) and iv) add up to at least 20 wt %.

8. A coloured, water-dissipatable polyurethane according to claim 1 wherein the amount of components iii) and iv) combined is in the range of from 20 to 55% by weight.

9. A coloured, water-dissipatable polyurethane according to any one of the preceding claims wherein components v) and vi) together comprises ≤ 15 wt %.

10. A coloured, water-dissipatable polyurethane according to any one of the preceding claims comprising in the range of from 15 to 50% by weight of chromophoric groups.

11. A coloured, water-dissipatable polyurethane according to any one of the preceding claims which when dissipitated In deionised water at 10% w/w and at 20 ± 3°C has a static surface tension ≥ 32 mN/m (dynes cm⁻¹).

12. A coloured, water-dissipatable polyurethane according to any one of the preceding claims which is yellow, magenta, cyan, black, orange, brown, red, blue or green.

13. An ink comprising a coloured, water-dissipatable polyurethane according to any one of claims 1 to 12 and a liquid medium.

14. An ink according to claim 13 comprising
(a) from 0.25 to 30 parts of the coloured, water-dissipatable polyurethane; and
(b) up to 99.75 parts of the liquid medium; wherein all parts are by weight and (a)+(b) = 100.

15. An ink according to claim 13 or 14 having a viscosity ≤ 20 mPa.s at 20°C.

16. An ink according to any one of claims 13 to 15 which has been filtered through a filter having a mean pore size ≤ 10µm.

17. An ink according to any one of claims 13 to 16 giving a solid area coverage with an optical density ≥ 0.5.

18. An ink according to any one of claims 13 to 17 suitable for use in a thermal ink-jet printer.

19. A process for printing an image on a substrate comprising applying thereto an ink containing a coloured, water-dissipatable polyurethane according to any one of claims 1 to 12, by means of an ink-jet printer.

20. An ink-jet printer cartridge containing an ink according to any one of claims 13 to 18.

## Patentansprüche

1. Gefärbtes, wasserverteilbares Polyurethan mit einem gewichtsmittleren Molekulargewicht ≤ 30.000 Dalton, erhalten aus der Umsetzung von Komponenten, umfassend:
i) 5 bis 50 Gew.-% mindestens eines organischen Polyisocyanats;
ii) 15 bis 50 Gew.-% mindestens einer Verbindung, die ionische wasserdispergierend wirkende Gruppen mit zwei oder mehr unter -OH-, -NH₂-, -NH- und -SH-Gruppen ausgewählten isocyanatreaktiven Gruppen bereitstellt;
iii) 15 bis 50 Gew.-% mindestens eines Farbmittels mit zwei oder mehr unter Isocyanatgruppen und isocyanatreaktiven Gruppen ausgewählten funktionellen Gruppen;
iv) 0 bis 35 Gew.-% mindestens eines Farbmittels mit einer unter Isocyanatgruppen und isocyanatreaktiven Gruppen ausgewählten funktionellen Gruppe;
v) 0 bis 10 Gew.-% mindestens einer anderen Verbindung mit zwei oder mehr isocyanatreaktiven Gruppen als in ii) oder iii) ;
vi) 0 bis 10 Gew.-% mindestens einer anderen Verbindung mit einer isocyanatreaktiven Gruppe als in iv);
wobei sich die Komponenten iii) und iv) zu mindestens 18% summieren und sich die Komponenten i), ii), iii), iv), v) und vi) zu 100% summieren.

2. Gefärbtes, wasserverteilbares Polyurethan nach Anspruch 1, kettenterminiert mit einem Farbmittel, erhalten aus der Umsetzung von Komponenten, umfassend:
i) 5 bis 50 Gew.-% mindestens eines organischen Polyisocyanats;
ii) 15 bis 50 Gew.-% mindestens einer Verbindung, die ionische wasserdispergierend wirkende Gruppen mit zwei oder mehr unter -OH-, -NH₂-, -NH- und -SH-Gruppen ausgewählten isocyanatreaktiven Gruppen bereitstellt;
iii) 15 bis 40 Gew.-% mindestens eines Farbmittels mit zwei oder mehr unter Isocyanatgruppen und isocyanatreaktiven Gruppen ausgewählten funktionellen Gruppen;
iv) 5 bis 35 Gew.-% mindestens eines Farbmittels mit einer unter Isocyanatgruppen und isocyanatreaktiven Gruppen ausgewählten funktionellen Gruppe;
v) 0 bis 10 Gew.-% mindestens einer anderen Verbindung mit zwei oder mehr isocyanatreaktiven Gruppen als in ii) oder iii) ;
vi) 0 bis 10 Gew.-% mindestens einer anderen Verbindung mit einer isocyanatreaktiven Gruppe als in iv);
wobei sich die Komponenten i), ii), iii), iv), v) und vi) zu 100% summieren.

3. Gefärbtes, wasserverteilbares Polyurethan nach Anspruch 2, umfassend ein gefärbtes, wasserverteilbares Polyurethan der Formel 2: 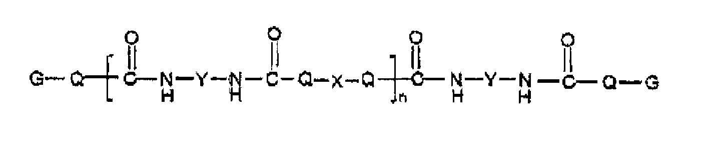 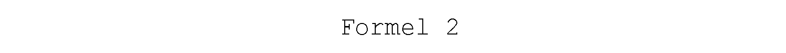 worin:
X für einen unabhängig von den Komponenten ii), iii) und/oder v) abgeleiteten Rest steht;
Q unabhängig unter O, NH, NR und/oder S aus- gewählt ist;
Y für einen von Komponente i) abgeleiteten Rest steht;
G für einen von Komponente iv) und gegebenenfalls Komponente vi) abgeleiteten Rest steht und
n für eine ganze Zahl von 1 bis 60 steht.

4. Gefärbtes, wasserverteilbares Polyurethan nach einem der vorhergehenden Ansprüche, wobei es sich bei mindestens einer Verbindung, die ionische wasserdispergierend wirkende Gruppen bereitstellt, um ein Diol mit einer oder mehreren Carbonsäure- oder Sulfonsäuregruppen oder ein Diol mit quaternären Ammoniumgruppen handelt.

5. Gefärbtes, wasserverteilbares Polyurethan nach einem der vorhergehenden Ansprüche mit einem gewichtsmittleren Molekulargewicht ≤ 25.000.

6. Gefärbtes, wasserverteilbares Polyurethan nach einem der vorhergehenden Ansprüche, umfassend 15 bis 49 Gew.-% Komponente ii).

7. Gefärbtes, wasserverteilbares Polyurethan nach Anspruch 1, wobei sich die Komponenten iii) und iv) zu mindestens 20 Gew.-% summieren.

8. Gefärbtes, wasserverteilbares Polyurethan nach Anspruch 1, wobei die Menge der Komponenten iii) und iv) kombiniert im Bereich von 20 bis 55 Gew.-% liegt.

9. Gefärbtes, wasserverteilbares Polyurethan nach einem der vorhergehenden Ansprüche, wobei die Komponenten v) und vi) zusammen ≤ 15 Gew.-% ausmachen.

10. Gefärbtes, wasserverteilbares Polyurethan nach einem der vorhergehenden Ansprüche, umfassend im Bereich von 15 bis 50 Gew.-% chromophore Gruppen.

11. Gefärbtes, wasserverteilbares Polyurethan nach einem der vorhergehenden Ansprüche, das bei Verteilung in entionisiertem Wasser bei 10 Gew.-% und 20 + 3°C eine statische Oberflächenspannung ≥ 32 mN/m (dyn/cm⁻¹) aufweist.

12. Gefärbtes, wasserverteilbares Polyurethan nach einem der vorhergehenden Ansprüche, das gelb, magenta, cyan, schwarz, orange, braun, rot, blau oder grün ist.

13. Tinte, umfassend ein gefärbtes, wasserverteilbares Polyurethan nach einem der Ansprüche 1 bis 12 und ein flüssiges Medium.

14. Tinte nach Anspruch 13, umfassend
(a) 0,25 bis 30 Teile des gefärbten, wasserverteilbaren Polyurethans und
(b) bis zu 99,75 Teile des flüssigen Mediums; wobei sich alle Teile auf das Gewicht beziehen und (a) + (b) - 100.

15. Tinte nach Anspruch 13 oder 14 mit einer Viskosität ≤ 20 mPa.s bei 20°C.

16. Tinte nach einem der Ansprüche 13 bis 15, die über ein Filter mit einer mittleren Porengröße ≤ 10 µm filtriert worden ist.

17. Tinte nach einem der Ansprüche 13 bis 16, die eine Vollfächendeckung mit einer optischen Dichte ≥ 0,5 ergibt.

18. Tinte nach einem der Ansprüche 13 bis 17, die zur Verwendung in einem Drucker für den thermischen Tintenstrahldruck geeignet ist.

19. Verfahren zum Aufdrucken eines Bilds auf ein Substrat, bei dem man darauf eine Tinte, die ein gefärbtes, wasserverteilbares Polyurethan nach einem der Ansprüche 1 bis 12 enthält, mit einem Tintenstrahldrucker aufbringt.

20. Tintenstrahldruckerpatrone, enthaltend eine Tinte nach einem der Ansprüche 13 bis 18.

## Revendications

1. Polyuréthane coloré dissipable dans l'eau ayant une masse moléculaire moyenne en poids ≤ 30 000 Daltons, obtenu par la réaction de composants comprenant :
i) de 5 à 50 % en poids d'au moins un polyisocyanate organique ;
ii) de 15 à 50 % en poids d'au moins un composé fournissant des groupes de dispersion dans l'eau ioniques portant au moins deux groupes réactifs avec les isocyanates choisis parmi les groupes -OH, -NH₂, -NH- et -SH ;
iii) de 15 à 50 % en poids d'au moins un colorant portant au moins deux groupes fonctionnels choisis parmi les groupes isocyanate et les groupes réactifs avec les isocyanates ;
iv) de 0 à 35 % en poids d'au moins un colorant portant un groupe fonctionnel choisi parmi les groupes isocyanate et les groupes réactifs avec les isocyanates ;
v) de 0 à 10 % en poids d'au moins un composé portant au moins deux groupes réactifs avec les isocyanates différents de ceux de ii) ou iii) ; et
vi) de 0 à 10 % en poids d'au moins un composé portant un groupe réactif avec les isocyanates différent de celui de iv) ;
dans lequel la somme des composants iii) et iv) représente au moins 18 %, et la somme des composants i), ii), iii), iv), v) et vi) fait 100 %.

2. Polyuréthane coloré dissipable dans l'eau selon la revendication 1 dont la chaîne est terminée par un colorant obtenu par la réaction de composants comprenant :
i) de 5 à 50 % en poids d'au moins un polyisocyanate organique ;
ii) de 15 à 50 % en poids d'au moins un composé fournissant des groupes de dispersion dans l'eau ioniques portant au moins deux groupes réactifs avec les isocyanates choisis parmi les groupes -OH, -NH₂, -NH- et -SH ;
iii) de 15 à 40 % en poids d'au moins un colorant portant au moins deux groupes fonctionnels choisis parmi les groupes isocyanate et les groupes réactifs avec les isocyanates ;
iv) de 5 à 35 % en poids d'au moins un colorant portant un groupe fonctionnel choisi parmi les groupes isocyanate et les groupes réactifs avec les isocyanates ;
v) de 0 à 10 % en poids d'au moins un composé portant au moins deux groupes réactifs avec les isocyanates différents de ceux de ii) ou iii) ; et
vi) de 0 à 10 % en poids d'au moins un composé portant un groupe réactif avec les isocyanates différent de celui de iv) ;
dans lequel la somme des composants i), ii), iii), iv), v) et vi) fait 100 %.

3. Polyuréthane coloré dissipable dans l'eau selon la revendication 2 comprenant un polyuréthane coloré dissipable dans l'eau de formule 2 : 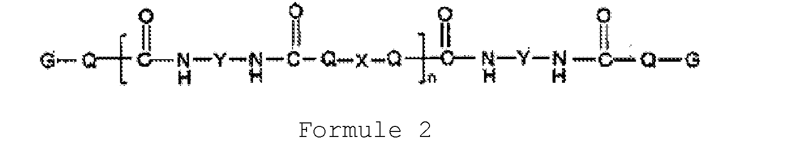 dans laquelle :
X est un résidu indépendamment dérivé des composants ii), iii) et/ou iv) ;
Q est indépendamment choisi parmi O, NH, NR et/ou S ;
Y est un résidu dérivé du composant i) ;
G est un résidu dérivé du composant iv) et éventuellement du composant vi) ; et
n est un entier valant de 1 à 60.

4. Polyuréthane coloré dissipable dans l'eau selon l'une quelconque des revendications précédentes dans lequel au moins un composé fournissant des groupes de dispersion dans l'eau ioniques est un diol portant un ou plusieurs groupes acide carboxylique ou acide sulfonique ou un diol portant des groupes ammonium quaternaires.

5. Polyuréthane coloré dissipable dans l'eau selon l'une quelconque des revendications précédentes ayant une masse moléculaire moyenne en poids ≤ 25 000.

6. Polyuréthane coloré dissipable dans l'eau selon l'une quelconque des revendications précédentes comprenant de 15 à 49 % en poids de composant ii).

7. Polyuréthane coloré dissipable dans l'eau selon la revendication 1 dans lequel la somme des composants iii) et iv) représente au moins 20 % en poids.

8. Polyuréthane coloré dissipable dans l'eau selon la revendication 1 dans lequel la quantité des composants iii) et iv) combinés se situe dans la gamme de 20 à 55 % en poids.

9. Polyuréthane coloré dissipable dans l'eau selon l'une quelconque des revendications précédentes dans lequel les composants v) et vi) représentent ensemble 15 % en poids ou moins.

10. Polyuréthane coloré dissipable dans l'eau selon l'une quelconque des revendications précédentes comprenant entre 15 et 50 % en poids de groupes chromophores.

11. Polyuréthane coloré dissipable dans l'eau selon l'une quelconque des revendications précédentes qui lorsque dissipé dans de l'eau déminéralisée à 10 % m/m et à 20 + 3 °C présente une tension superficielle statique ≥ 32 mN/m (dynes.cm⁻¹).

12. Polyuréthane coloré dissipable dans l'eau selon l'une quelconque des revendications précédentes qui est jaune, magenta, cyan, noir, orange, brun, rouge, bleu ou vert.

13. Encre comprenant un polyuréthane coloré dissipable dans l'eau selon l'une quelconque des revendications 1 à 12 et un milieu liquide.

14. Encre selon la revendication 13 comprenant
(a) de 0,25 à 30 parties du polyuréthane coloré dissipable dans l'eau ; et
(b) jusqu'à 99,75 parties du milieu liquide ; dans lequel toutes les parties sont en poids et (a) + (b) = 100.

15. Encre selon la revendication 13 ou 14 ayant une viscosités ≤ 20 mPa.s à 20 °C.

16. Encre selon l'une quelconque des revendications 13 à 15 qui a été filtrée à travers un filtre ayant une taille moyenne de pores ≤ 10 µm.

17. Encre selon l'une quelconque des revendications 13 à 16 donnant un recouvrement de zone pleine avec une densité optique ≥ 0,5.

18. Encre selon l'une quelconque des revendications 13 à 17 appropriée pour utilisation dans une imprimante à jet d'encre thermique.

19. Procédé d'impression d'une image sur un substrat comprenant l'application à celui-ci d'une encre contenant un polyuréthane coloré dissipable dans l'eau selon l'une quelconque des revendications 1 à 12 au moyen d'une imprimante à jet d'encre.

20. Cartouche d'imprimante à jet d'encre contenant une encre selon l'une quelconque des revendications 13 à 18.
